Europäisches Patentamt

European Patent Office

Office européen des brevets

(11) Veröffentlichungsnummer: **0 293 675**
**B1**

(12) **EUROPÄISCHE PATENTSCHRIFT**

(45) Veröffentlichungstag der Patentschrift:
**18.07.90**

(21) Anmeldenummer: **88107998.2**

(22) Anmeldetag: **19.05.88**

(51) Int. Cl.⁵: **A01B 33/14**

(54) **Bodenbearbeitungsgerät.**

(30) Priorität: **02.06.87 DE 8707829 U**

(43) Veröffentlichungstag der Anmeldung:
**07.12.88 Patentblatt 88/49**

(45) Bekanntmachung des Hinweises auf die Patenterteilung:
**18.07.90 Patentblatt 90/29**

(84) Benannte Vertragsstaaten:
**AT DE FR GB IT NL**

(56) Entgegenhaltungen:
**EP-A- 0 129 047**
**DE-A- 2 924 671**
**DE-B- 1 137 887**
**DE-C- 375 412**
**FR-A- 2 541 848**
**GB-A- 231 045**
**US-A- 2 803 183**
**US-A- 3 534 818**

(73) Patentinhaber: **Rabewerk GmbH + Co., D-4515 Bad Essen(DE)**

(72) Erfinder: **Warnking, Richard, Dipl.-Ing., Glockenpatt 5, D-4515 Bad Essen 1(DE)**

(74) Vertreter: **Missling, Arne, Dipl.-Ing., Patentanwalt Bismarckstrasse 43, D-6300 Giessen(DE)**

ACTORUM AG

**Beschreibung**

Die Erfindung betrifft ein Bodenbearbeitungsgerät der im Oberbegriff des Anspruches 1 genannten Art, wie es durch die GB-A 231 045 bekanntgeworden ist.

Die GB-A 231 045 beschreibt ein Gerät, bei welchem jeweils wenigstens eine eine Zinke und ihren Träger durchgreifende Befestigungsschraube abscherbar ist, wobei die Zinken, damit diese nicht weggeschleudert werden können, zusätzlich mit Haltevorrichtungen versehen sind. Ferner können die Zinken nur in einer Drehrichtung der mit den Trägern versehenen Welle beaufschlagt werden.

Aus der DE-B 1 137 887 ist eine Anordnung von als Werkzeuge zur Bodenbearbeitung dienenden Zinken auf Halteplatten bekannt, die auf einer waagerecht liegenden, rotierenden Welle eines Bodenbearbeitungsgerätes mit stechender oder schlagender Arbeitsweise befestigt sind, an welcher mehrere, gebogene Zinken angebracht sind, die verschiedene, um etwa eine Vierteldrehung gegeneinander gedrehte Stellungen einnehmen können. Die gebogenen Zinken weisen einen voreilenden Punkt A und einen nacheilenden Punkt B auf, die dabei so angeordnet sind, daß bei Drehung der Halteplatte in einer gegebenen Richtung der voreilende Punkt A auf den Boden zu einer Zeit auftrifft, zu welcher der nacheilende Punkt B noch außerhalb des Bodens ist. Einrichtungen zum Drehen der Zinken über etwa eine Vierteldrehung auf der Halteplatte sorgen dafür, daß bei Drehung der Halteplatte in der entgegengesetzten Richtung eine derartige Änderung der Zinkenstellung herbeigeführt wird, so daß der normalerweise nacheilende Punkt B zu einem Zeitpunkt auf den Boden auftrifft, zu welchem der normalerweise voreilende Punkt A nacheilt, wobei der normalerweise voreilende Punkt A sich dann außerhalb des Bodens befindet.

Einer abgewandelten Ausführungsform der bekannten Anordnung zufolge weist die Halteplatte jeweils zwei Anschläge für die Zinken auf, die so angeordnet sind, daß die drehbar an der Halteplatte angebrachten Zinken bei einem Richtungswechsel der Plattendrehung über etwa eine Vierteldrehung aus einer Stellung, an der sie an einem Anschlag anliegen, in eine Stellung gleiten, in welcher sie an dem nächstfolgenden Anschlag anliegen.

Durch die zuvor beschriebene Anordnung kann bei Drehung der Halteplatte in der gegebenen Richtung zwar aufgabengemäß ein Hackvorgang und bei Drehung der Halteplatte in der entgegengesetzten Richtung auch ein Schneidvorgang mit den Zinken erhalten werden, doch ist hier bei der bekannten Anordnung nicht das Problem gelöst, ob und wie sicher sich die als Werkzeuge zur Bodenbearbeitung dienenden Zinken, z.B. als Fräsmesser, bei Überbeanspruchung ganz von der Halteplatte lösen können, damit Beschädigungen, insbesondere an Zinken, Getriebe und Gehäuse, dieses Bodenbearbeitungsgerätes vermeidbar sind.

Ein Nachteil bei dieser Anordnung der Zinken besteht darin, daß weniger Freiraum innerhalb der Drehwelle bei Tiefackern von Böden vorhanden und daß daher eine Verstopfungsgefahr der Drehwelle nicht auf ein gewünschtes Mindestmaß begrenzbar ist.

In der US-PS 4 629 007 ist ein Bodenbearbeitungsgerät für einen Drehkultivator beschrieben. An Ecken einer auf einer Drehwelle befestigten Montierplatte sind Fräsmesser mit Befestigungsabschnitten vorgesehen, von denen mindestens einer der Befestigungsabschnitte zur Achse der Drehwelle geneigt ist. Jeder Befestigungsabschnitt der Montierplatte weist eine Verriegelungsöffnung auf, und jedes Fräsmesser ist mit einem Verriegelungszapfen versehen, der in die Verriegelungsöffnung passend einsetzbar ist, welche im entsprechenden Befestigungsabschnitt vorgesehen ist. Die Fräsmesser und die Befestigungsabschnitte der Montierplatte haben außerdem eine Durchgangsbohrung zum Durchführen eines Einzelbolzens, um jedes Fräsmesser an der Montierplatte zu befestigen.

Ein Nachteil bei dieser Befestigung der Fräsmesser an der Montierplatte besteht darin, daß sich die Fräsmesser nicht von der an der Drehwelle befestigten Montierplatte lösen können, so daß insbesondere die Fräsmesser und das Getriebe bei Überbeanspruchung schnell beschädigt werden können. Ein weiterer Nachteil bei diesem Bodenbearbeitungsgerät liegt darin, daß die Fertigung der Fräsmesser und der Montierplatte ziemlich aufwendig ist, weil die Verriegelungsöffnung im Befestigungsabschnitt des Fräsmessers mit der Durchgangsbohrung im Befestigungsabschnitt der Montierplatte genau übereinstimmen muß. Die Fräsmesser können somit auch nicht so leicht auf der Montierplatte in Arbeitsposition gebracht werden.

Der Erfindung liegt die Aufgabe zugrunde, ein Bodenbearbeitungsgerät der eingangs genannten Art zu schaffen, welches bei einfachem Aufbau und betriebssicherer Wirkungsweise ein hohes Maß an Betriebssicherheit aufweist und bei welchem eine Beschädigung des Bodenbearbeitungsgerätes durch im Erdboden befindliche Hindernisse in sicherer Weise vermieden wird.

Die Aufgabe wird erfindungsgemäß dadurch gelöst, daß die formschlüssige Verdrehsicherung einen am Träger befestigten Anschlag und eine am Ende der Werkzeuge ausgebildete gabelförmige Ausnehmung umfaßt, die den als Zapfen ausgebildeten Anschlag umgreift, daß bei einer Krafteinleitung auf das Werkzeug eine Scherkraft auf das Verbindungselement des Werkzeuges zum Träger aufbringbar ist und daß das Werkzeug nach Abscheren des Verbindungselementes vom Träger gelöst ist.

Weitere vorteilhafte Ausgestaltungen der Erfindung ergeben sich aus den Unteransprüchen.

Das erfindungsgemäße Bodenbearbeitungsgerät zeichnet sich durch eine Reihe erheblicher Vorteile aus. Während es bei dem Stand der Technik stets angestrebt wurde, die Werkzeuge oder Zinken möglichst starr mit dem Träger oder der Trägerplatte zu verbinden, um ein in sich starres, festes Werkzeug zu erzielen, ist es erfindungsgemäß möglich, bei einem Auftreffen des Bodenbearbeitungsgerätes auf ein feststehendes Hindernis, beispielsweise einen grossen Stein, das Werkzeug oder eines der Werkzeuge von dem Bodenbearbeitungsgerät zu trennen. Es wird somit verhindert, daß das Bodenbearbeitungsgerät selbst, d.h. insbesondere dessen Antriebsmechanismus abrupt abgebremst und blokkiert wird. Weiterhin wird eine Gefährdung für die Bedienungsperson ausgeschlossen, da es beispielsweise bei einem handbetätigten Bodenbearbeitungsgerät nicht zu einem plötzlichen Verkanten oder Verreißen des Gerätes kommen kann. Erfindungsgemäß sind somit Beschädigungen des Bodenbearbeitungsgerätes ausgeschlossen. Das abgescherte Werkzeug kann in einfacher Weise durch Erneuerung des Verbindungselementes wieder angebracht werden, es ist auch möglich, das Werkzeug durch ein neues Werkzeug zu ersetzen. Da Bodenbearbeitungsgeräte der beschriebenen Art üblicherweise mehrere Werkzeuge aufweisen, ist es nicht erforderlich, den Bearbeitungsvorgang sofort zu unterbrechen, vielmehr kann die Bedienungsperson zunächst mit der Bodenbearbeitung fortfahren und braucht lediglich in gewissen Zeitintervallen die Werkzeuge nachkontrollieren. Ein weiterer Vorteil des erfindungsgemäßen Bodenbearbeitungsgeräts besteht darin, daß ein Bruch des Werkzeugs selbst vermieden wird, da sich dieses von dem Träger löst, bevor das Werkzeug als solches beschädigt wird. Aus diesem Grunde ist es auch wesentlich einfacher, an dem Bodenbearbeitungsgerät ein neues Werkzeug zu befestigen, da es nicht erforderlich ist, beschädigte Reste von Werkzeugen in aufwendiger Weise zu entfernen. Erfindungsgemäß ist es weiterhin in vorteilhafter Weise möglich, die einzelnen Werkzeuge zu wechseln und sie z.B. gegen andersgeformte Werkzeuge auszutauschen. Ein derartiger Austausch kann erfolgen, ohne daß dabei die erfindungsgemäße Betriebssicherheit beeinträchtigt würde. Weiterhin ist es möglich, die Werkzeuge zu drehen oder zu wenden, um die Art der Bodenbearbeitung zu wechseln.

In der nachfolgenden Beschreibung wird der Träger auch als Halteplatte bezeichnet. Da das Werkzeug üblicherweise in Form eines Zinken ausgebildet ist, ist in der nachfolgenden Beschreibung dieser Begriff verwendet worden, ohne daß sich dadurch eine Beschränkung ergeben würde.

Die mit der Erfindung erzielten Vorteile bestehen insbesondere darin, daß die an den Halteplatten befestigten, als Werkzeuge zur Bodenbearbeitung dienenden Zinken bei Auftreten von Überbeanspruchung ohne weiteres lösbar sind und somit Beschädigungen, insbesondere an Zinken, Getriebe und Gehäuse des Bodenbearbeitungsgerätes vermieden werden. Die Zinken können aus Flachstahl und damit billiger herstellbar sein. Sie sind ferner leichter im Gewicht und können schneller auf den Halteplatten der Drehwelle montiert bzw. bei schlagendem Bodenbearbeiten gewechselt werden als bei den bekannten Bodenbearbeitungsgeräten. Ein weiterer Vorteil besteht darin, daß die Abmessungen der Zinken und Halteplatten auf ein Mindestmaß beschränkbar sind, so daß sie mehr Freiraum innerhalb der Drehwelle bei Tiefbeackerung von Böden bieten. Die Zinken, wie auch die Halteplatten, liegen, wenn sie gerade ausgebildet sind, in einer radialen Ebene senkrecht zur Achse der Drehwelle, so daß damit die Verstopfungsgefahr der Drehwelle auf ein Mindestmaß begrenzbar ist.

Ausführungsbeispiele der Erfindung sowie andere erfindungsgemäße Anordnungen der Zinken sind in der Zeichnung dargestellt und werden im folgenden näher beschrieben. Es zeigen

Fig. 1 eine teilweise geschnittene Seitenansicht der erfindungsgemäßen Anordnung;
Fig. 2 in einer teilweise geschnittenen Vorderansicht eine Ausführungsform der erfindungsgemäßen Anordnung mit gleichmäßig beabstandeten Halteplatten auf der Drehwelle und
Fig. 3 in einer teilweise geschnittenen Vorderansicht eine weitere Ausführungsform der erfindungsgemäßen Anordnung gemäß Figur 1.

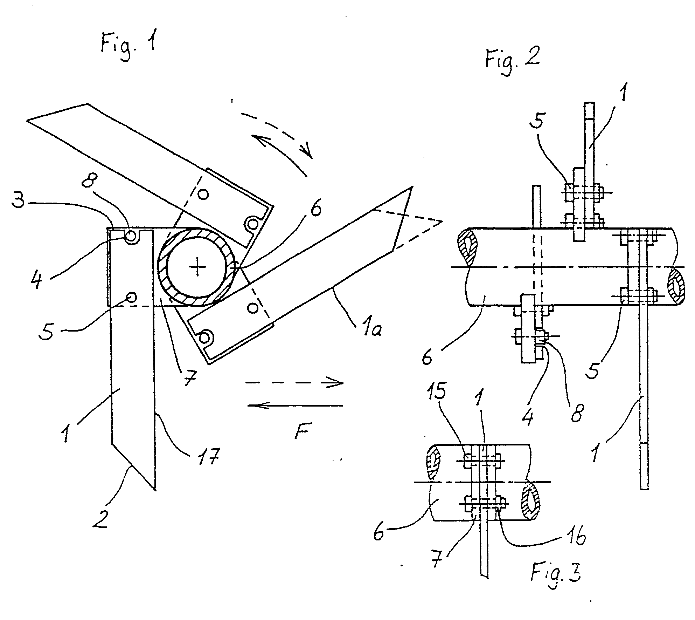

Figur 1 zeigt eine teilweise geschnittene Seitenansicht der erfindungsgemäßen Anordnung, bei der als Werkzeuge zur Bodenbearbeitung dienende Zinken 1 auf Halteplatten 7 jeweils unter rechtem Winkel zu den Halteplatten 7 angeordnet sind, die auf eine waagerecht liegende, hohle Drehwelle 6 eines Bodenbearbeitungsgerätes, das stechend oder schlagend arbeitet, geschweißt sind. Die Zinken 1 haben Abschrägungen 2 für schlagendes Beackern des Bodens und können durch Schmieden geformt werden. Die Vorderseite 17 kann z.B. durch Anschmieden schneidenförmig ausgebildet sein, so daß die Zinken 1 bei stechender Arbeitsweise, also von oben her, unter geringem Energiebedarf in den Boden einstechen und diesen nach hinten wegreißen können. Sie bewirken dabei ein ausreichendes Aufbrechen oder Zerkleinern des Bodens, also eine gewünschte Bodenstruktur, die aus einem Gemisch verschiedener Bodenstücke besteht. Mit der schneidenförmigen Ausbildung der Zinken 1 können Wurzeln zerschnitten und damit ein Hängenbleiben der Wurzeln vermieden werden.

Wenn, wie die Figur 1 zeigt, insgesamt drei Zinken auf den auf der Drehwelle 6 angebrachten Halteplatten 7 angeordnet sind, bilden sie zwangsläufig radial einen Winkel von 120° zur Drehwelle 6.

Die Mitten von Endseiten 3 der Zinken 1 weisen erfindungsgemäß gabelartige Ausnehmungen 4 auf, die in angeschweißte Zapfen 8 auf den Halteplatten 7 eingreifen. Die einzelnen Zinken 1 sind der Erfindung zufolge mit Schrauben 5 auf den Halteplatten 7 so befestigt, daß die Schrauben 5 bei Überbeanspruchung, beispielsweise bei der Bearbeitung harter, toniger und teilweise steiniger Böden, abscheren, wobei sich die Zinken 1 von den an der hohlen Drehwelle 6 angebrachten Halteplatten 7 ohne weiteres lösen können, so daß Beschädigungen, insbesondere von Zinken und eines nicht dargestellten Getriebes, des Bodenbearbeitungsgerätes vermeidbar sind. Auf diese Weise werden hohe Reparatur- und Ersatzteilkosten eingespart. Mit der zuvor beschriebenen erfindungsgemäßen Anordnung der Zinken 1 auf den Halteplatten 7 wird außerdem vermieden, daß die Zinken 1 an das Gehäuse des Bodenbearbeitungsgerätes schlagen und es beschädigen.

Wie die Figur 1 ferner zeigt, ist jeweils ein Zinken 1 einer Halteplatte 7 zugeordnet. Die Zinken 1 können gerade ausgebildet sein und lassen sich dann einfacher und billiger aus Flachstahl herstellen. Zur Schaffung von mehr Freiraum innerhalb der Drehwelle 6 bei Tiefackern von Böden sind die Abmessungen der Zinken 1 und die der Halteplatten 7 auf ein Mindestmaß beschränkt.

Diese Teile sind daher auch leicht im Gewicht und können somit schnell auf den Halteplatten 7 der hohlen Drehwelle 6 montiert bzw. bei schlagender Bodenbearbeitung gemäß der in Figur 1 gezeigten gestrichelten Pfeilrichtung umgewechselt werden. Dies gilt auch für andere Ausbildungsformen der Zinken 1, z.B. für Fräsmesser.

Aus der Figur 1 ist auch ersichtlich, daß die Zinken 1 und die Halteplatten 7 jeweils in einer radial zur hohlen Drehwelle 6 verlaufenden Ebene liegen, und daß die auf den Halteplatten 7 befestigten Zinken 1, wie bereits ausgeführt, um 120° zueinander angeordnet sind. Die in Figur 1 dargestellte Befestigungsmöglichkeit der Zinken 1 auf den Halteplatten 7 läßt sich auch auf Fräsmesser sowie auf andere zur Bodenbearbeitung geeignete Werkzeuge übertragen, wobei solche Werkzeuge dann nicht mehr in einer Ebene radial zur Achse der Drehwelle 6 verlaufen.

Bei schlagender Bodenbearbeitung schlagen Längsseiten 1a der Zinken 1 zwar auch von oben auf den Boden, doch ist hierbei der Energiebedarf wegen des den Zinken 1 entgegengesetzten größeren Widerstandes wesentlich höher als bei stechender Bodenbearbeitung und deshalb nur für besondere Böden, aber nicht universell geeignet.

Figur 2 zeigt in einer teilweise geschnittenen Vorderansicht eine Ausführungsform der erfindungsgemäßen Anordnung mit einem Abschnitt der Drehwelle 6, auf der die Halteplatten 7 und damit auch die an ihnen befestigten Zinken 1 gleichmäßig so beabstandet sind, daß sich ein konstantes Antriebsmoment für die Drehwelle 6 ergibt.

Figur 3 zeigt in einer teilweise geschnittenen Vorderansicht eine weitere Ausgestaltung der erfindungsgemäßen Anordnung gemäß Figur 1, wonach der Zinken 1 doppelseitig von den an der Drehwelle 6 befestigten Halteplatten 7 mittels Nieten 15 und Schrauben 16 eingefaßt ist, aus denen er sich bei Überlastung durch Abreissen der Schrauben 16 lösen kann.

## Patentansprüche

1. Bodenbearbeitungsgerät mit einem um eine Achse drehbaren Träger (7) und zumindest einem daran gelagerten, frei vorstehenden, zinkenartigen Werkzeug (1), wobei das Werkzeug (1) und der Träger (7) von einem Gehäuse umgeben sind und wobei das Werkzeug (1) mittels eines bolzenartigen Verbindungselementes (5), welches das Werkzeug (1) und den Träger (7) durchgreift und welches abscherbar ausgebildet ist, befestigt ist und zusätzlich formschlüssig gegen Verdrehung gesichert ist, dadurch gekennzeichnet, daß die formschlüssige Verdrehsicherung einen am Träger (7) befestigten Anschlag (8) und eine am Ende der Werkzeuge (1) ausgebildete gabelförmige Ausnehmung (4) umfaßt, die den als Zapfen (8) ausgebildeten Anschlag umgreift, daß bei einer Krafteinleitung auf das Werkzeug (1) eine Scherkraft auf das Verbindungselement (5) des Werkzeuges (1) zum Träger (7) aufbringbar ist und daß das Werkzeug (1) nach Abscheren des Verbindungselementes (5) vom Träger (7) gelöst ist.

2. Bodenbearbeitungsgerät nach Anspruch 1, dadurch gekennzeichnet, daß das Werkzeug (1) mit einer Schraube (5) an dem Träger (7) befestigt ist.

3. Bodenbearbeitungsgerät nach Anspruch 1 oder 2, dadurch gekennzeichnet, daß das Werkzeug (1) aus Flachmaterial besteht und gerade ausgebildet ist.

4. Bodenbearbeitungsgerät nach einem der Ansprüche 1 bis 3, dadurch gekennzeichnet, daß das Werkzeug (1) Abschrägungen (2) aufweist.

5. Bodenbearbeitungsgerät nach einem der Ansprüche 1 bis 4, dadurch gekennzeichnet, daß mehrere Werkzeuge (1) und mehrere Träger (7) symmetrisch zueinander angeordnet sind.

6. Bodenbearbeitungsgerät nach Anspruch 1, dadurch gekennzeichnet, daß das Werkzeug (1) als Zinken ausgebildet und auf dem Träger (7) von einer stechenden zu einer schlagenden Bodenbearbeitung umkehrbar ist.

7. Bodenbearbeitungsgerät nach einem der Ansprüche 5 oder 6, dadurch gekennzeichnet, daß Werkzeuge (1) auf einer mit dem Träger (7) verbundenen Drehwelle (6) gleichmäßig zur Erhaltung eines konstanten Antriebsmoments beabstandet sind.

8. Bodenbearbeitungsgerät nach einem der Ansprüche 1 bis 7, dadurch gekennzeichnet, daß die Werkzeuge (1) und die Träger (7) in Ebenen senkrecht zur Drehwelle (6) angeordnet sind.

9. Bodenbearbeitungsgerät nach einem der Ansprüche 1 bis 7, dadurch gekennzeichnet, daß das Werkzeug (1) an dem dem Träger (7) zugewandten Ende abgewinkelt ist, so daß es an der Seite (14) des Trägers (7) anlegbar ist.

10. Bodenbearbeitungsgerät nach einem der Ansprüche 1 bis 9, dadurch gekennzeichnet, daß das Werkzeug (1) beidseitig am Träger (7) gehaltert ist.

11. Bodenbearbeitungsgerät nach einem der Ansprüche 1 bis 10, dadurch gekennzeichnet, daß jeweils einem Werkzeug (1) ein Träger (7) zugeordnet ist.

12. Bodenbearbeitungsgerät nach einem der Ansprüche 1 bis 11, dadurch gekennzeichnet, daß die Abmessungen des Werkzeugs (1) und des Trägers (7) zur Schaffung eines maximalen Freiraumes innerhalb der Drehwelle (6) auf ein Mindestmaß beschränkt sind.

13. Bodenbearbeitungsgerät nach einem der Ansprüche 1 bis 12, dadurch gekennzeichnet, daß das Werkzeug (1) eine Vorderseite (17) mit einer anschmiedbaren Schneide aufweist.

## Claims

1. A soil cultivation implement having a carrier (7) which is rotatable about an axis and at least one freely projecting tine-like tool (1) mounted on it, wherein the tool (1) and the carrier (7) are surrounded by a housing and the tool (1) is secured by means of a bolt-like connecting element (5) which passes through the tool (1) and the carrier (7) and is formed so as to be shearable, and is additionally frictionally secured so as to be non-rotatable, characterised in that the frictional means for preventing rotation is a stop (8) fastened on the carrier (7) and a forked recess (4) on the end of the tools (1), which recess embraces the stop, which is in the form of a spigot (8), that, given the application of force to the tool (1), a shearing force can be applied to the element (5) connecting the tool (1) to the carrier (7) and that, following shearing of the connecting element (5) from the carrier (7), the tool (1) is released.

2. A soil cultivation implement as claimed in claim 1, characterised in that the tool (1) is secured by a screw (5) to the carrier (7).

3. A soil cultivation implement as claimed in claim 1 or 2, characterised in that the tool (1) is made of flat material and is in straight form.

4. A soil cultivation implement as claimed in any of claims 1 to 3, characterised in that the tool (1) has sloping edges (2).

5. A soil cultivation implement as claimed in any of claims 1 to 4, characterised in that a plurality of tools (1) and a plurality of carriers (7) are disposed symmetrically with respect to one another.

6. A soil cultivation implement as claimed in claim 1, characterised in that the tool (1) is in the form of tines and can be changed on the carrier (7) from a penetrating to a pounding type of soil cultivation.

7. A soil cultivation implement as claimed in either of claims 5 or 6, characterised in that tools (1) are uniformly spaced on a rotary shaft (6) connected to the carrier (7) to maintain a constant driving torque.

8. A soil cultivation implement as claimed in any of claims 1 to 7, characterised in that the tools (1) and the carriers (7) are disposed in planes perpendicular to the rotary shaft (6).

9. A soil cultivation implement as claimed in any of claims 1 to 7, characterised in that the end of the tool (1) facing the carrier (7) is bent at an angle so that it can be placed against the side (14) of the carrier (7).

10. A soil cultivation implement as claimed in any of claims 1 to 9, characterised in that the tool (1) is held on the carrier (7) on both sides.

11. A soil cultivation implement as claimed in any of claims 1 to 10, characterised in that a carrier (7) is associated with each tool (1).

12. A soil cultivation implement as claimed in any of claims 1 to 11, characterised in that the dimensions of the tool (1) and the carrier (7) are limited to a minimum to create maximum free space within the rotary shaft (6).

13. A soil cultivation implement as claimed in any of claims 1 to 12, characterised in that the tool (1) has a front end (17) having a cutting edge which can be produced on it by forging.

**Revendications**

1. Dispositif pour le travail du sol comportant un support (7) qui peut tourner autour d'un axe et au moins un outil (1) en forme de dent monté sur ce support, librement en saillie, l'outil (1) et le support (7) étant entourés par un carter et l'outil (1) étant fixé au moyen d'un élément de liaison (5) en forme de tige, qui traverse l'outil (1) et le support (7) et qui peut être cisaillé, et étant de plus empêché de tourner par un engagement positif, caractérisé en ce que le dispositif qui s'oppose en engagement positif à la rotation comprend une butée (8) fixée sur le support (7) et un évidement (4) en forme de fourche ménagé à l'extrémité des outils (1), entourant la butée constituée comme un tenon (8), en ce que lors de l'application d'une force sur l'outil (1) une force de cisaillement peut être appliquée sur l'élément de liaison (5) de l'outil (1) au support (7), et en ce que l'outil (1) est libéré du support après cisaillement de l'élément de liaison (5).

2. Dispositif de travail du sol selon la revendication 1, caractérisé en ce que l'outil (1) est fixé sur le support (7) à l'aide d'une vis (5).

3. Dispositif de travail du sol selon la revendication 1 ou 2, caractérisé en ce que l'outil (1) est en matériau plat et est d'une configuration droite.

4. Dispositif de travail du sol selon l'une des revendications 1 à 3, caractérisé en ce que l'outil (1) présente des chanfreins (2).

5. Dispositif de travail du sol selon l'une des revendications 1 à 4, caractérisé en ce que plusieurs outils (1) et plusieurs supports (7) sont disposés de façon symétrique les uns par rapport aux autres.

6. Dispositif de travail du sol selon la revendication 1, caractérisé en ce que l'outil (1) est réalisé sous forme de dents, et peut être retourné sur le support pour passer d'une position de travail du sol par enfoncement à une position de travail du sol par impacts.

7. Dispositif de travail du sol selon l'une des revendications 5 ou 6, caractérisé en ce que des outils (1) sont espacés de façon uniforme sur un arbre tournant (6) relié au support (7), pour obtenir un couple d'entraînement constant.

8. Dispositif de travail du sol selon l'une des revendications 1 à 7, caractérisé en ce que les outils (1) et les supports (7) sont disposés dans des plans perpendiculaires à l'arbre tournant (6).

9. Dispositif de travail du sol selon l'une des revendications 1 à 7, caractérisé en ce que l'outil (1) est plié à son extrémité tournée vers le support (7), de sorte qu'il peut être appliqué sur le côté (14) du support (7).

10. Dispositif de travail du sol selon l'une des revendications 1 à 9, caractérisé en ce que l'outil (1) est maintenu des deux côtés sur le support (7).

11. Dispositif de travail du sol selon l'une des revendications 1 à 10, caractérisé en ce qu'à chaque outil (1) correspond respectivement un support (7).

12. Dispositif de travail du sol selon l'une des revendications 1 à 11, caractérisé en ce que les dimensions de l'outil (1) et du support (7) sont limitées au minimum pour réaliser un espace libre maximal à l'intérieur de l'arbre tournant (6).

13. Dispositif de travail du sol selon l'une des revendications 1 à 12, caractérisé en ce que l'outil (1) présente une face avant (17) ayant un tranchant forgeable.

Fig. 1

Fig. 2

Fig. 3